# EUROPÄISCHE PATENTSCHRIFT

(11) **EP 0 690 169 B1**
(45) Veröffentlichungstag und Bekanntmachung des Hinweises auf die Patenterteilung: **26.03.1997**
(21) Anmeldenummer: 95106745.3
(22) Anmeldetag: 04.05.1995
(51) Int. Cl.: D21G 1/02, F16C 13/00

(54) **Beheizbare Walze zur Behandlung von Warenbahnen sowie Verfahren zu deren Betrieb**
Heatable roll for treating fabric web as well as its operation procedure
Rouleau chauffant pour le traitement de bande de feuille ainsi que la procédure de son opération

(30) Priorität: 26.05.1994 DE 4418344
(43) Veröffentlichungstag der Anmeldung: 03.01.1996
(73) Patentinhaber: Voith Sulzer Finishing GmbH Krefeld, 47803 Krefeld (DE)
(72) Erfinder: Conrad, Hans-Rolf, D-41539 Dormagen (DE); Cramer, Dirk, D-47259 Duisburg (DE)
(74) Vertreter: Finsterwald, Manfred, Dipl.-Ing., Dipl.-Wirtsch.-Ing.

(56) Entgegenhaltungen:
- EP-A- 0 295 655
- DE-A- 3 005 526
- DE-A- 3 013 648
- DE-A- 3 545 123
- DE-A- 4 130 672
- US-A- 4 733 697
- US-A- 4 823 688

## Beschreibung

Die Erfindung betrifft eine beheizbare Walze zur Behandlung von Warenbahnen, insbesondere Papierbahnen,
mit einer in geringem Abstand zur Walze angeordneten und diese teilweise umschließenden Umhüllung, die zur Vermeidung von unter Produktionsbedingungen auftretenden Wärmeverlusten an die Umgebung als Wärmeisolierung ausgebildet ist.

Ferner ist die Erfindung auf ein Verfahren zum Betrieb einer derartigen beheizbaren Walze gerichtet.

Heizwalzen sind als Walze mit Verdrängerkörper beispielsweise aus der DE-PS 28 14 244, als Walze mit peripheren Bohrungen im Walzenmantel für den Wärmeträgerdurchfluß aus DE-OS 38 38 726 oder als Walze mit Durchbiegungsausgleich über hydrostatische Stützelemente aus der DE-PS 35 16 535 bekannt.

Aus der DE-OS 41 30 672 ist es bekannt, derartige Heizwalzen über ihre gesamte Länge von außen zu kühlen, wenn die im Walzeninneren erzeugte Wärme nicht mehr über die Warenbahn abgeführt wird, wie dies beispielsweise dann der Fall ist, wenn ein Riß der Warenbahn auftritt. Durch diese Kühlung soll erreicht werden, daß keine zu starke Aufheizung der Walze erfolgt, die zwangsläufig eine Veränderung des Durchmesserprofils zur Folge hat.

Mittels einer Unterbrechung der Beschickung der beheizten Walze mit dem Wärmeträgermedium kann nicht erreicht werden, daß im Falle eines Bahnrisses keine störende Erhöhung der Oberflächentemperatur der Walze auftritt. Grund dafür ist der hohe Temperaturgradient von der Innenseite des Walzenmantels zu deren Oberfläche, der Ursache dafür ist, daß die Walze hinsichtlich Temperaturänderungen nur träge reagieren kann.

Es ist auch bereits bekannt, schnellaufende Heizwalzen in eine Wärmeisolierung einzukapseln und damit während des Normalbetriebs der Walze störende Wärmeverluste durch Konvektion und Strahlung an die Umgebung zu vermeiden. Das Vorhandensein einer derartigen Wärmeisolierung führt bei Warenbahnrissen hinsichtlich auftretender Temperaturerhöhungen zu einer Vergrößerung der Problematik.

Aufgabe der Erfindung ist es, eine beheizbare Walze zur Behandlung von Warenbahnen zu schaffen, die es gestattet, die aufgezeigten Schwierigkeiten zumindest weitestgehend zu beseitigen und auch im Falle des Auftretens von Warenbahnrissen die Einhaltung des Durchmesser-Sollprofils der Walze zu gewährleisten.

Diese Aufgabe wird nach der Erfindung durch die Merkmale des Patentanspruchs 1 gelöst. Besonders vorteilhafte Ausgestaltungen sind in den Unteransprüchen angegeben.

Durch die erfindungsgemäßen Maßnahmen gelingt es, einerseits bei Normalbetrieb eine hohe thermische Isolation der Walze zu gewährleisten und andererseits bei einer Produktionsunterbrechung sicherzustellen, daß keine zu störenden profilveränderungen führenden Aufheizeffekte der Walze eintreten. Dies hat zur Folge, daß nach einer Betriebsunterbrechung beim Wiederanfahren der Anlage unzulässig hohe Temperatureinwirkungen auf die Warenbahn vermieden werden und beispielsweise bei Papierbahnen gewährleistet werden kann, daß Parameter wie Glanz oder Glätte bereits unmittelbar nach dem Wiederanfahren der Anlage den vor der Betriebsunterbrechung vorhandenen Sollwerten entsprechen.

Besonders vorteilhaft ist es, daß die isolierende Umhüllung der beheizten Walze gleichzeitig als Träger für die Kühlmittelzuführungen genutzt wird, wobei durch die radiale Einleitung des Kühlmediums in den geringen Spalt zwischen Walze und Umhüllung Turbulenzen geschaffen werden können, welche den erforderlichen Kühleffekt stark fördern und dessen gleichmäßiges Wirksamwerden über die gesamte Walzenoberfläche sicherstellen.

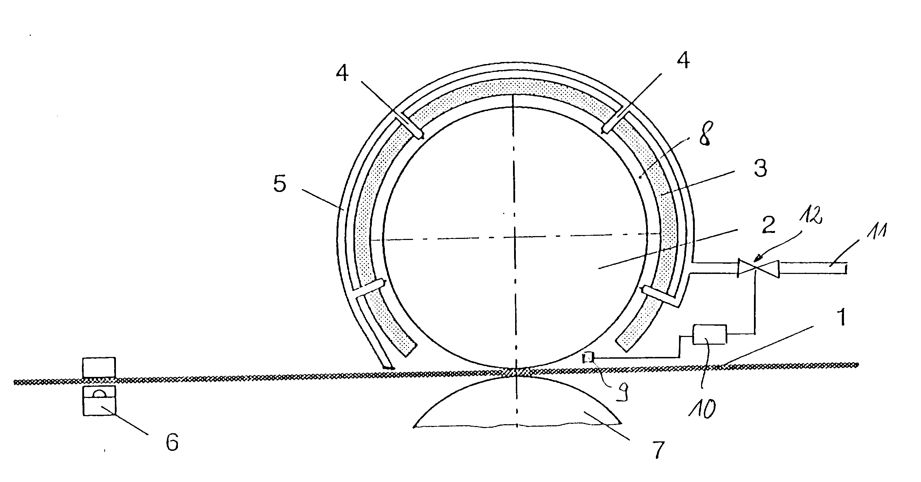

Ein Ausführungsbeispiel der Erfindung ist in der Zeichnung dargestellt. Diese Zeichnung zeigt eine schematische Seitenansicht einer eine Warenbahn behandelnden Heizwalze, die von einer Umhüllung umgeben ist, in die eine Anzahl von Kühldüsen integriert ist, so daß eine je nach Bedarf sowohl Isolier- als auch Kühlfunktion gewährleistende Einheit vorliegt.

Eine Warenbahn 1 ist zwischen der behandelnden Heizwalze 2 und einer Gegenwalze 7 geführt. Die Heizwalze ist von einer starr ausgebildeten Umhüllung 3 aus einem wärmeisolierenden Material teilweise umgeben, wobei diese Ummantelung der Walze 2 vorzugsweise so ausgeführt ist, daß der Großteil der Walze 2 umschlossen ist und die Umhüllung 3 benachbart der jeweiligen Warenbahn 1 so endet, daß sie deren Lauf nicht beinträchtigt.

Die Umhüllung 3 ist in nicht dargestellter Weise an dem Walzengestell oder an der der Walzenlagerung befestigt.

In der aus Isolier- bzw. Dämmaterial bestehenden Umhüllung 3 sind, in Umfangsrichtung und in axialer Richtung über die Länge der Walze 2 verteilt, Kühldüsen 4 angeordnet und vorzugsweise gehaltert.

Diese Kühldüsen 4 sind zur Walzenoberfläche hin gerichtet und erstrecken sich vorzugsweise in den Spaltraum 8 zwischen Walze 2 und Umhüllung 3. Auf eine zusätzliche Halterung für die Düsen sowie deren Speiseleitungen kann verzichtet werden. Diese Aufgabe übernimmt die stabil und starr ausgebildete Umhüllung 3.

Es kann auch vorgesehen sein, die Düsen 4 so in der Umhüllung zu haltern, daß ihre Richtung bezüglich der Walzenoberfläche verändert werden kann, um auf diese Weise bestimmte Turbulenzverhältnisse zu schaffen.

Bevorzugt wird in der Umhüllung 3 eine Vielzahl von Düsen 4 angebracht, so daß alle Bereiche der Walzenoberfläche im wesentlichen gleichmäßig oder - wenn dies aufgrund der jeweiligen Gegebenheiten gewünscht wird - über die Länge der Walze betrachtet unterschiedlich mit Kühlfluid, insbesondere Kühlluft beaufschlagt werden können.

Die Düsen 4 werden von außen über Zuführleitungen 5 mit dem Kühlfluid, bei dem es sich auch um eine Flüssigkeit handeln kann, versorgt, und zwar ab dem Zeitpunkt, zu dem ein beispielsweise aus einer Lichtschranke bestehender Sensor eine Unterbrechung des Produktionsbetriebs signalisiert und damit feststellt, daß beispielsweise die Warenbahn 1 gerissen ist.

Die Zuführung des Kühlfluids zu den Düsen 4 kann über ein Dosierventil 12 oder mehrere Dosierventile 12 erfolgen, wobei dem jeweiligen Dosierventil 12 bestimmte Gruppen von Düsen 4 zugeordnet sein können. Auf diese Weise ist es möglich, für alle gewünschten Oberflächentemperaturen die zu deren Einhaltung benötigte Kühlfluidmenge zur Verfügung zu stellen. Dabei kann auch dafür gesorgt werden, daß die Kühldüsen 4 in axialer Richtung unterschiedlich beaufschlagt sind, um die Kühlwirkung über die Walzenlänge zu variieren.

Es ist auch eine Automatisierung bzw. eine Steuerung oder Regelung der Kühlfluidzufuhr möglich, indem mittels eines Sensors 9 oder mittels mehrerer derartiger Sensoren die Walzenoberflächentemperatur erfaßt und über eine Stelleinheit 10 das jeweilige Dosierventil 12 beeinflußt wird.

Mittels der beschriebenen Vorrichtung ist es möglich, bei Produktionsunterbrechung, insbesondere bei einem Riß der Warenbahn, in dem Spaltraum 8 zwischen Umhüllung 3 und beheizter Walze 2 Kühlfluid einzuleiten und die pro Zeiteinheit zugeführte Kühlfluidvolumenmenge derart zu wählen, daß die Oberflächentemperatur der Walze zumindest im wesentliauf der bei normaler Produktion geforderten Solltemperatur gehalten wird.

Nach Beseitigung der Produktionsunterbrechung wird die Kühlmittelzufuhr abgeschaltet und die Umhüllung 3, die während der Produktionsunterbrechung als Führungs- und Leitfläche für das Kühlfluid dient, kann wieder ihre Hauptfunktion als Einheit zur Verhinderung von Wärmeverlusten übernehmen, wobei das Vorhandensein der integrierten Kühlfluidzuführungen diese Funktion nicht störend beeinträchtigt.

## Patentansprüche

1. Beheizbare Walze (2) zur Behandlung von Warenbahnen (1), insbesondere Papierbahnen,
mit einer in geringem Abstand zur Walze (2) angeordneten und diese teilweise umschließenden Umhüllung (3), die zur Vermeidung von unter Produktionsbedingungen auftretenden Wärmeverlusten an die Umgebung als Wärmeisolierung ausgebildet ist,
dadurch **gekennzeichnet,**
daß eine bei Produktionsunterbrechung zuschaltbare Einrichtung (4, 5) zur Einspeisung von Kühlfluid in den zwischen Walze (2) und Umhüllung (3) gebildeten Spaltraum (8) vorgesehen ist.

2. Walze nach Anspruch 1,
dadurch **gekennzeichnet,**
daß das Kühlfluid über zumindest ein Dosierventil (12) zuführbar ist, das in Abhängigkeit von der Oberflächentemperatur der Walze (2) gesteuert oder geregelt ist.

3. Walze nach Anspruch 1 oder 2,
dadurch **gekennzeichnet,**
daß eine Mehrzahl von über die axiale Länge und/oder den Umfang der Walze (2) verteilte Düsen (4) zur Kühlfluidzuführung vorgesehen ist.

4. Walze nach Anspruch 3,
dadurch **gekennzeichnet,**
daß die Düsen (4) gruppenweise zusammengefaßt und mit Kühlfluid in vorgebbarem Mengenverhältnis gespeist sind.

5. Walze nach Anspruch 4,
dadurch **gekennzeichnet,**
daß die Düsengruppen über in Abhängigkeit von über die Walzenoberfläche verteilten Temperatursensoren angesteuerte Dosierventile gespeist sind.

6. Walze nach einem der vorhergehenden Ansprüche,
dadurch **gekennzeichnet,**
daß die Umhüllung (3) als Trägereinheit für die Einrichtung (4, 5) zur Kühlfluidzuführung ausgebildet ist.

7. Walze nach Anspruch 6,
dadurch **gekennzeichnet,**
daß die zur Kühlfluidzuführung vorgesehenen Düsen (4) sich durch die Umhüllung (3) erstrecken und im Spaltraum (8) mit vorgebbarem Abstand zur Walzenoberfläche münden.

8. Walze nach Anspruch 7,
dadurch **gekennzeichnet,**
daß die Ausströmrichtung des Kühlfluids aus den Düsen (4) im wesentlichen senkrecht zur Walzenoberfläche verläuft.

9. Walze nach Anspruch 1,
dadurch **gekennzeichnet,**
daß die Einrichtung zur Einspeisung von Kühlfluid in Abhängigkeit von einem die jeweilige Warenbahn (1) überwachenden Sensor (6) zuschaltbar ist.

10. Verfahren zum Betreiben einer einen Arbeitsspalt bildenden Walzenanordnung zur Behandlung von Warenbahnen (1) mit zumindest einer beheizten und über wenigstens die Hälfte ihres Umfangs von einer wärmeisolierenden Umhüllung (3) mit geringem Abstand umschlossenen Walze (2),
dadurch **gekennzeichnet,**
daß bei Produktionsunterbrechung, insbesondere bei einem Riß der Warenbahn (1), in den Spaltraum (8) zwischen Umhüllung (3) und beheizter Walze (2) Kühlmedium eingeleitet und die pro Zeiteinheit zugeführte Volumenmenge derart gewählt wird, daß die Oberflächentemperatur der Walze (2) zumindest im wesentlichen auf der bei normaler Produktion geforderten Solltemperatur gehalten wird.

## Claims

1. Heatable roll (12) for the treatment of webs of material (1), in particular paper webs, comprising a jacket (3) which is arranged at a small spacing from the roll (2) and partly surrounds the latter and which is formed as thermal insulation to avoid heat losses to the environment arising under production conditions, characterised in that a means (4, 5) is provided which can be switched on during an interruption of production for the feeding of cooling fluid into the gap space (8) formed between the roll (2) and the jacket (3).

2. Roll in accordance with claim 1, characterised in that the cooling fluid can be supplied via at least one metering valve (12, 7) which is controlled or regulated in dependence on the surface temperature of the roll (2).

3. Roll in accordance with claim 1, characterised in that a plurality of nozzles (4) distributed over the axial length and/or the circumference of the roll (2) are provided for the supply of cooling fluid.

4. Roll in accordance with claim 3, characterised in that the nozzles (4) are combined group-wise and are fed with cooling fluid in a predeterminable quantity ratio.

5. Roll in accordance with claim 4, characterised in that the nozzle groups are fed via metering valves controlled in dependence on temperature sensors distributed over the roll surface.

6. Roll in accordance with claim 1, characterised in that the jacket (3) is formed as a carrier unit for the means (4, 5) for the supply of cooling fluid.

7. Roll in accordance with claim 6, characterised in that the nozzles (4) provided for the supply of cooling fluid extend through the jacket (3) and open into the gap space (8) with a predeterminable spacing from the roll surface.

8. Roll in accordance with claim 7, characterised in that the outflow direction of the cooling fluid from the nozzles (4) extends substantially perpendicular to the roll surface.

9. Roll in accordance with claim 1, characterised in that the means for feeding cooling fluid can be switched in in dependence on a sensor (6) which monitors the respective web of material (1).

10. Method of operating a roll arrangement forming a working gap for the treatment of goods (1) in web form, comprising at least one heated roll (2) which is surrounded at a small distance over at least half its periphery by a thermally insulating jacket (3), characterised in that with an interruption in production, in particular with a tear of the web (1) of material, cooling medium is introduced into the gap space (8) between the jacket (3) and the heated roll (2) and the volume quantity supplied per unit time is selected such that the surface temperature of the roll (2) remains at at least substantially the desired temperature required during normal production.

## Revendications

1. Rouleau pouvant être chauffé (2) destiné au traitement de bandes de matière (1), notamment de bandes de papier, muni d'une enceinte (3) disposée à une distance très réduite du rouleau (2) et l'enserrant partiellement, qui est conçue pour faire office d'isolation thermique pour éviter le dégagement dans le milieu environnant des déperditions de chaleur qui se produisent dans les conditions de service pratique, caractérisé en ce qu'un dispositif (4, 5) pouvant être mis en service en cas d'interruption de la production pour alimenter en fluide de refroidissement l'intervalle d'écartement (8) ménagé entre le rouleau (2) et l'enceinte (3) est prévu.

2. Rouleau selon la revendication 1, caractérisé en ce que le fluide de refroidissement peut être alimenté par l'intermédiaire d'au moins une vanne doseuse (12), qui peut être commandée ou réglée en fonction de la température superficielle du rouleau (2).

3. Rouleau selon la revendication 1 ou 2, caractérisé en ce qu'une pluralité de buses (4), réparties sur la longueur axiale et/ou le périmètre du rouleau (2), est prévue pour l'amenée du fluide de refroidissement.

4. Rouleau selon la revendication 3, caractérisé en ce que les buses (4) sont agencées en groupes et sont alimentées en fluide de refroidissement selon un rapport volumétrique pouvant être présélectionné.

5. Rouleau selon la revendication 4, caractérisé en ce que les groupes de buses sont alimentés par l'intermédiaire de vannes doseuses pilotées en réponse à des détecteurs de température répartis sur la surface du rouleau.

6. Rouleau selon l'une des revendications précédentes, caractérisé en ce que l'enceinte (3) est conçue pour faire office de support pour le dispositif (4, 5) d'amenée du fluide de refroidissement.

7. Rouleau selon la revendication 6, caractérisé en ce que les buses (4) prévues pour l'amenée du fluide de refroidissement s'étendent au travers de l'enceinte (3) et débouchent dans l'intervalle d'écartement (8) à une distance de la surface du rouleau pouvant être présélectionnée.

8. Rouleau selon la revendication 7, caractérisé en ce que la direction de l'écoulement du fluide de refroidissement en provenance des buses (4) est essentiellement perpendiculaire à la surface du rouleau.

9. Rouleau selon la revendication 1, caractérisé en ce que le dispositif d'alimentation en fluide de refroidissement peut être mis en service en réponse à un détecteur (6) surveillant la bande de matière (1) concernée.

10. Procédé pour la mise en oeuvre d'un agencement de rouleau formant un intervalle de travail pour le traitement de bandes de matière (1), comportant au moins un rouleau (2) chauffé et entouré, avec un intervalle d'écartement très réduit, par une enceinte isolante à la chaleur (3) sur au moins la moitié de sa circonférence, caractérisé en ce que, lors d'une interruption de la production, en particulier lors d'une rupture de la bande de matière (1), dans l'intervalle d'écartement (8) entre l'enceinte (3) et le rouleau chauffé (2), un fluide de refroidissement est introduit et en ce que le volume débité par unité de temps est choisi de telle façon que la température superficielle du rouleau (2) soit maintenue essentiellement à la température théorique exigée dans les conditions de production normale.
